# EUROPEAN PATENT APPLICATION

(11) **EP 4 560 036 A1**
(43) Date of publication of application: **28.05.2025**
(21) Application number: 23842456.8
(22) Date of filing: 24.07.2023
(51) Int. Cl.: C22C 38/00, C23C 28/00, C23C 2/40, C21D 11/00, C09D 7/61, B21D 37/16, B21B 1/38

(54) **ALUMINUM-SILICON-PLATED STEEL PLATE AND THERMOFORMED COMPONENT, AND MANUFACTURING METHODS THEREFOR**

(30) Priority: 22.07.2022 CN 202210869048
(71) Applicant: BAOSHAN IRON & STEEL CO., LTD., Shanghai 201900 (CN)
(72) Inventor: TAN, Ning, Shanghai 201900 (CN); LIU, Hao, Shanghai 201900 (CN); JIN, Xinyan, Shanghai 201900 (CN); MA, Xuedan, Shanghai 201900 (CN)
(74) Representative: Kuhnen & Wacker Patent- und Rechtsanwaltsbüro PartG mbB
(86) International application number: PCT/CN2023/108974
(87) International publication number: WO 2024/017394

(57) **Abstract**

An aluminum-silicon-plated steel plate with a coating, the aluminum-silicon-plated steel plate comprising a steel substrate and an aluminum-silicon plating plated on the surface of the steel substrate, the surface of the aluminum-silicon plating being further coated with a coating, wherein the coating contains C, H, O, N and Si and does not contain P, and the content of Si in the coating is 10-1000 mg/m². A manufacturing method for the aluminum-silicon-plated steel plate, and a thermoformed component prepared by using the aluminum-silicon-plated steel plate. The manufacturing method for the aluminum-silicon-plated steel plate comprises the steps of steel making, hot rolling, cold rolling, hot dipping, leveling and coating with a paint to form a coating. A manufacturing method for the thermoformed component specifically comprises the steps of: (1) cutting an aluminum-silicon-plated steel plate into a blank; (2) subjecting same to a heat treatment in a furnace, wherein the heating rate of the blank from room temperature to 700°C is controlled to be 5-30°C/s, and the heating rate at 700°C or higher is controlled to be 1-10°C/s; and (3) transferring the blank into a mold for hot stamping or rolling forming.

## Description

### Technical field

The present disclosure relates to a steel plate, a thermal formed part, and a manufacturing method therefor, and in particular relates to a plated steel plate, a thermal formed part, and a manufacturing method therefor.

### Background Art

In recent years, with the rapid development of the automotive industry, the market and users have higher and higher requirements for vehicles, and lightweight has gradually become the development trend of the automotive industry in the future.

At present, in order to meet the requirements of vehicle lightweight, thermal formed steel is often used to prepare automotive structural parts and safety parts, and its application in the market is increasing. However, the thermal formed steel without a plating prepared currently cannot meet the needs of users due to problems such as decarburization, oxide scale shot blasting, dimensional accuracy, and poor corrosion resistance.

Therefore, considering the above-mentioned shortcomings of the thermal formed steel without a plating, researchers in this art have designed and developed a thermal formed steel coated with an aluminum-silicon plating. The designed aluminum-silicon plated steel plate has been widely used in the field of thermal formed steel since it has excellent heat resistance, corrosion resistance and high temperature oxidation resistance due to its own aluminum-silicon plating.

At present, the domestic demand for this kind of aluminum-silicon plated thermal formed steel is about 800,000 tons/year, but the inventor's research has found that the aluminum-silicon plating of this aluminum-silicon plated thermal formed steel also has more or less certain problems, such as the problem of sticking to rollers in the hot stamping process of aluminum-silicon plating.

With respect to this problem of sticking to rollers, currently, researchers usually solve this problem by optimizing the plating thickness and ramping curve and the like.

For example, the Chinese patent publication CN101910426A is published on December 8, 2010, and titled "A manufacturing method of stamping products and the stamping products manufactured thereby". In this technical solution, in order to improve the plating sticking to rollers, it is necessary to control the heating rate, especially the heating rate from room temperature to 700 °C being 4~12 °C/s. According to this calculation, it generally takes 1~3min for the steel plate to be heated from room temperature to 700 °C, and the austenitization temperature is above 840 °C. It also needs a period of heat preservation to complete austenitization, so it generally takes 3~6min for the substrate to complete austenitization from room temperature.

For another example, the Chinese patent publication CN106164184A, published on November 23, 2016, and titled " Method of producing press-hardened and -coated steel parts at a high productivity rate", discloses a hot-stamping steel with a polymer layer, which comprises a polymer layer applied on the aluminum-silicon plating. It can increase the heating rate of the aluminum-silicon plating, but the polymer layer is 2~30 microns, and the aluminum-silicon plating is generally more than 20 microns. Such a thick polymer layer and coating layer pose a great challenge for coiling, and the polymer layer produces a large amount of decomposition products during subsequent heat treatment, which can affect the atmosphere control in the furnace and the surface quality of the product as well as delay cracking.

For another example, the Chinese patent publication CN109518114A, published on March 26, 2019, and titled "Manufacturing method of hot stamping part with aluminum silicon alloy plating layer and hot stamping part", discloses a manufacturing method of hot-stamped parts. It mentions the use of heating in stage to improve the plating sticking to rollers, but the effect is limited. Especially for thick-gauge products, it may take longer time. But thick-gauge hot stamping steel products are in increasing demand, especially for new energy battery packs, bumpers, etc.

Therefore, considering that the existing technical solutions proposed at present cannot solve the problem well, the inventor believes that it is of practical significance to study how to improve the heating efficiency of thermal formed steel products while improving the problem of the plating sticking to rollers.

### Summary

An object of the present disclosure is to provide an aluminum-silicon plated steel plate with a coating. The aluminum-silicon plated steel plate can be effectively used to prepare thermal formed products, which can not only effectively solve the problem of aluminum-silicon plating sticking to rollers, but also can effectively improve the heating efficiency when preparing thermal formed products, and it has good promotion prospects and application effects.

In order to achieve the above purpose, the present disclosure proposes an aluminum-silicon plated steel plate with a coating, which comprises a steel substrate and an aluminum-silicon plating plated on the surface of the steel substrate, wherein the surface of the aluminum-silicon plating is further coated with a coating, wherein the coating contains C, H, O, N and Si and does not contain P, and the content of Si in the coating is 10-1000 mg/m².

In the above-mentioned technical solution of the present disclosure, the coating coated on the surface of the aluminum-silicon plating contains Si element and does not contain P element. P element tends to remain on the surface and can have an impact on the subsequent coating solution.

Correspondingly, in the coating designed by the present disclosure, the main effect of adding an appropriate amount of Si element is to increase the adhesion of the coating without leaving residue on the surface at the same time. It should be noted that when the Si content in the coating is too low, the beneficial effects of Si cannot be exerted. When the Si content in the coating is too high, it is easy to produce residues on the surface. Therefore, in the present disclosure, the content of Si element in the coating must be strictly controlled, and the content of Si element in the coating is specifically controlled to be 10-1000mg/m². In some embodiments, the Si content in the coating is controlled to be 200-1000mg/m². The Si content in the coating is controlled to be 200-500mg/m².

Further, in the aluminum-silicon plated steel plate with a coating according to the present disclosure, the thickness of the coating is no more than 2 microns and does not exceed one-tenth of the thickness of the aluminum-silicon plating.

Further, in the aluminum-silicon plated steel plate with a coating according to the present disclosure, the thickness of the aluminum-silicon plating is 10-30 microns.

Further, in the aluminum-silicon plated steel plate with a coating according to the present disclosure, the steel substrate has a surface roughness Ra of 0.5-1.5, and Rpc of 50-100.

In the above technical solution of the present disclosure, the surface roughness of the steel substrate of the aluminum-silicon plated steel plate with a coating may be preferably controlled with Ra of 0.5-1.5 and Rpc of 50-100.

As described herein, the definition of Ra is a standard definition that refers to the arithmetic mean of the absolute value of Z-directional deviation from the mean line over a sampled length.

As described herein, the definition of Rpc is a standard definition expressed as the number of roughness profile elements that continuously cross the specified upper profile cut-off line C1 and lower profile cut-off line C2 per unit length.

In the present disclosure, the main reason for controlling the surface roughness Ra between 0.5 and 1.5 is to further enhance the adhesion of the coating, and also to increase the endothermic area, so that the heating rate can be further improved.

Correspondingly, the main reason for controlling Rpc between 50 and 100 is to improve the surface profile and increase the adhesion of the coating, thereby further increasing the endothermic area.

In the present disclosure, Ra and Rpc are controlled in the above range by controlling the cooling rate after plating, the roll surface profile, and the temper rolling rate. Specifically, in the present disclosure, the cooling rate after plating is controlled to be 5~30°C/s, the surface roughness of the roll is controlled to be Ra>1.5, Rpc>100, and the temper rolling rate is controlled to be 0.8-3%.

Further, in the aluminum-silicon plated steel plate with a coating according to the present disclosure, the steel substrate comprises the following chemical elements in mass percentage:
C: 0.05~0.5%, Si: 0.01~2.0%, Mn: 0.3~3.0%, Al: 0.005~0.3%, Ti≤0.1%, B≤0.1%, Cr≤0.5%, Nb≤0.1%, V≤0.1%, Ni≤0.5%, Mo≤0.5%, with a balance of Fe and other unavoidable impurities.

In some embodiments, in the steel substrate, the mass percentage of C is 0.05~0.35%.

In some embodiments, in the steel substrate, the mass percentage of Si is 0.1~1.0% or 0.8~2.0%.

In some embodiments, in the steel substrate, the mass percentage of Mn is 0.5~1.5% or 1.0~3.0%.

In some embodiments, in the steel substrate, the mass percentage of Ti is 0.01~0.1%.

In some embodiments, in the steel substrate, the mass percentage of B is 0.001~0.1%.

In some embodiments, in the steel substrate, the mass percentage of Cr is 0.1~0.5%.

In some embodiments, in the steel substrate, the mass percentage of Nb is 0.001~0.1%.

In some embodiments, in the steel substrate, the mass percentage of Mo is 0.001~0.2%.

In some embodiments, in the steel substrate, the mass percentage of Ni is 0.001~0.2%.

In some embodiments, in the steel substrate, the mass percentage of V is 0.001~0.1%.

Further, in the aluminum-silicon plated steel plate with a coating according to the present disclosure, among unavoidable impurities of the steel substrate, P is ≤0.3%, S is ≤0.1%.

Further, in the aluminum-silicon plated steel plate with a coating according to the present disclosure, the aluminum-silicon plating comprises Al and unavoidable impurities, and further comprises: Si: 6-11wt%, 0<Fe≤4wt%. In some embodiments, the content of Si is 8-11wt%. In some embodiments, the content of Fe is 0.1-4wt%, such as 1-3wt%.

Further, in the aluminum-silicon plated steel plate with a coating according to the present disclosure, the aluminum-silicon plating further contains Mg and/or Zn. In some embodiments, the content of Mn is ≤2wt%, such as 0-2wt% or 0.5-1.5wt%. In some embodiments, the content of Zn is ≤5wt%, such as 0-5wt% or 2-5wt%.

Further, the coating contains a filler and a resin. In some embodiments, the filler comprises a carbon material and a silane coupling agent. In some embodiments, the resin comprises at least one of polyester resins, polyurethane resins and polyacrylic resins. In some embodiments, the resin component comprises one or more of polyurethanes, polyacrylates and polyethylene terephthalates. In some embodiments, the carbon material comprises at least one of graphite, graphene and activated carbon. In some embodiments, the mass ratio of the filler to the resin is 1:1~1:20, such as 1:1~1:10. In some embodiments, the mass ratio of the carbon material to the silane coupling agent is 0.05~1. In some embodiments, the mass ratio of the carbon material to the silane coupling agent is 0.1~1.

Further, in the aluminum-silicon plated steel plate with a coating according to the present disclosure, the surface of the coating may be further coated with an oiling layer.

In the above technical solution of the present disclosure, the surface of the coating may also be further coated with an oiling layer. The surface of the aluminum-silicon plated steel plate with a coating can be oiled to further reduce the friction between the steel plates, thereby protecting the integrity of the coating.

Correspondingly, the present disclosure also discloses the manufacturing method of the aluminum-silicon plated steel plate with the coating, which particularly comprises steps of steelmaking, hot rolling, cold rolling, hot plating, temper rolling, applying a coating material to form the coating.

It should be noted that the manufacturing method of the steel substrate of the present disclosure comprises steps such as steelmaking, hot rolling, cold rolling and hot plating, and the specific process parameters of these steps can use process parameters familiar in the art. For example, the steelmaking step may include smelting and casting to obtain a billet according to the required composition. The hot rolling steps can include rough rolling, finish rolling and coiling, and the finish rolling temperature can be 880~930°C, and the coiling temperature can be 500~650°C. The cold rolling step includes cold rolling to form a steel strip, and the cold rolling deformation rate is 30~70%. It can be processed in a continuous annealing furnace and then fed into a zinc pot for hot-dipping. The annealing temperature can be 670~850°C, the plating solution temperature can be 640~680°C, and the cooling rate after plating can be 5~30°C/s.

It should be noted that, when the manufacturing method of the aluminum-silicon plated steel plate of the present disclosure is implemented, when the coating material is applied to form the coating, the coating material can be coated by a variety of methods such as roller coating, brush coating or electrostatic coating.

Further, in the manufacturing method of the aluminum-silicon plated steel plate with a coating according to the present disclosure, the mass percentages of the effective ingredients of the paint are as follows:
a filler: 0.5~30%;
a resin: 10~50%;
with a balance of a solvent;
wherein the filler comprises a carbon material and a silane coupling agent.

Further, in the manufacturing method of the aluminum-silicon plated steel plate with a coating according to the present disclosure, the mass ratio of the carbon material to the silane coupling agent is 0.05~1. In some embodiments, the mass ratio of the carbon material to the silane coupling agent is 0.1~1.

Further, in the manufacturing method of the aluminum-silicon plated steel plate with a coating according to the present disclosure, the carbon material at least comprises at least one of graphite, graphene and activated carbon.

Further, the silane coupling agent has a chemical formula of RSiX₃; wherein X represents a hydrolyzable functional group, which can be hydrolyzed to form silanol, that is, Si(OH)₃, which combines with inorganic substances to form siloxane; R represents an organic functional group, which can undergo a coupling reaction with organic groups such as alkenyl (such as vinyl), alkoxy (such as ethoxy), acid group (methacrylic acid group), amino group, sulfhydryl group, inorganic materials, synthetic resins, and rubber. Exemplary X includes halogens, C₁₋₆ alkoxy groups (e.g., methoxy, ethoxy, etc.), C₁₋₆ alkoxy-C₁₋₆ alkoxy groups (e.g., methoxyethoxy), C₁₋₆ alkyl carbonyl groups (e.g., acetoxy, etc.). Exemplary R groups include C₂₋₆ alkenyl, amino, epoxy, methacryloyloxy, sulfhydryl, and ureido. According to the type of reactive group in the R group, the silane coupling agents are also called vinyl silanes, aminosilanes, epoxy silanes, mercaptosilanes, methacryloxysilanes, and the like. Suitable silane coupling agents include vinyl triethoxysilane, vinyl trimethoxysilane, and vinyltris(β-methoxyethoxy)silane, etc.

Further, in the manufacturing method of the aluminum-silicon plated steel plate with a coating according to the present disclosure, the resin comprises at least one of polyester resins, polyurethane resins, and polyacrylic resins.

In some embodiments, the resin component comprises one or more of polyurethanes, polyacrylates and polyethylene terephthalates.

According to the type of resin, an appropriate silane coupling agent can be selected to couple the carbon material and the resin to form a filler-silane coupling agent-resin in the coating.

Further, in the manufacturing method of the aluminum-silicon plated steel plate with a coating according to the present disclosure, the solvent is water, ethanol, ketones, ethers or esters. In some embodiments, the solvent is water, ethanol, or esters. In some embodiments, the solvent is one or more of water, ethanol, ethyl ether, butanone and ethyl acetate.

Further, in the manufacturing method of the aluminum-silicon plated steel plate with a coating according to the present disclosure, in the temper rolling step, the temper rolling rate is 0.8-3%.

Further, the manufacturing method of the aluminum-silicon plated steel plate with a coating according to the present disclosure also comprises oiling after the step of coating, wherein the oiling amount is controlled to be 300-1000mg/m².

Moreover, another object of the present disclosure is to provide a thermal formed part. The preparation process of the thermal formed part is quite simple, and it does not have the problem of sticking to rollers.

In order to achieve the above purpose, the present disclosure provides a thermal formed part, which is made of the aluminum-silicon plated steel plate according to the present disclosure.

In order to achieve the above purpose, the present disclosure provides a thermal formed part, which is made of the aluminum-silicon plated steel plate prepared by the manufacturing method according to the present disclosure.

Further, in the thermal formed part of the present disclosure, its microstructure has at least one of martensite, bainite and ferrite.

In the thermal formed part designed by the present disclosure, the microstructure of the thermal formed part finally obtained can comprise one or more of martensite, bainite, ferrite, and its specific composition and the content thereof are related to the chemical element composition of the steel substrate and the cooling rate of the blank in the mold from 800 °C to 300 °C.

In addition, the present disclosure also discloses the manufacturing method of the thermal formed part, and the aluminum-silicon plated steel plate of the present disclosure can be effectively prepared into the required thermal formed part by adopting the manufacturing method.

In order to achieve the above purpose, the present disclosure proposes a manufacturing method for the above thermal formed part, which comprises steps:
(1) cutting the aluminum-silicon plated steel plate into blanks;
(2) performing a heat treatment in the furnace: the heating rate of the blank from room temperature to 700 °C is 8-30 °C/s, and the heating rate above 700 °C is 1-10 °C/s;
(3) transferring the blank to a mold for hot stamping or roll forming, in which the blank is cooled with the help of the mold, and the cooling rate of the blank in the mold from 800°C to 300 °C is not less than 25 °C/s.

In the manufacturing method designed by the present disclosure, the aluminum-silicon plated steel plate of the present disclosure can be cut into a blank, and the blank is delivered into a heat treatment furnace for heat treatment, and the ramping rate of the blank from room temperature to 700 °C is controlled to be 5-30 °C/s, such as 8-30 °C/s, and the ramping rate above 700 °C is 1-10 °C/s. In some embodiments, the ramping rate from 700 to 900°C is 1-10°C/s.

In the above heat treatment process, the blank is delivered into the heat treatment furnace for heat treatment. The heat treatment furnace temperature can be specifically controlled at 700-1000 °C. The temperature can be raised in stages, can rise and fall, or it can be one or more temperatures. The maximum temperature of the heat treatment furnace can be controlled to be 900-1000 °C, and the total residence time of the blank after it enters the heat treatment furnace can be preferably controlled at 1-15min, such as 1-10 minutes, 1-5 minutes or 2-5 minutes. In some embodiments, the residence time of the blank at 900-1000°C is 1-5 minutes, such as 2~4 minutes.

In addition, it should be noted that in the present disclosure, the inventor also controls the cooling rate of the blank in the mold, and the cooling rate of the blank in the mold from 800 °C to 300 °C is specifically controlled to be not less than 25 °C/s, such as 25~100 °C/s or 25~80 °C/s, so as to ensure that the finished steel can obtain the required microstructure.

Further, in the manufacturing method of the thermal formed part of the present disclosure, in step (2), the total residence time of the blank after it enters the heat treatment furnace is controlled to be 1-15min.

Further, in the manufacturing method of the thermal formed part of the present disclosure, in step (3), the temperature at which the blank is transferred to the mold is not less than 650°C, such as 650~780 °C, and the stamping speed at which the mold begins to contact the blank until the blank is formed is controlled to be 40-100mm/s.

Further, the manufacturing method of the thermal formed part of the present disclosure further comprises a step of manufacturing an aluminum-silicon plated steel plate by adopting the manufacturing method of the aluminum-silicon plated steel plate with a coating in any embodiment of the present document.

Compared with the prior art, the aluminum-silicon plated steel plate, the thermal formed part of the present disclosure and the method for manufacturing the same have the following advantages and beneficial effects:
(1) Compared with the traditional aluminum-silicon plated steel plate, the aluminum-silicon plated steel plate designed by the present disclosure can effectively reduce the aluminum-silicon plating sticking to rollers and improve the service life of the furnace during production and preparation.
(2) Compared with the traditional aluminum-silicon plated steel plate, when preparing the aluminum-silicon plated steel plate designed by the present disclosure, a variety of heating modes can be adopted, especially the rapid heating mode is applicable, and the rapid heating mode at the initial heating stage is especially applicable, and it can be guaranteed that the whole aluminum-silicon plating is complete and does not stick to rollers in this mode.
(3) Compared with the traditional aluminum-silicon plated steel plate, the present disclosure adopts a rapid heating mode when a thermal formed part is prepared from this aluminum-silicon plated steel plate, which can reduce the total residence time of the steel plate in the heat treatment furnace.

It should be noted that in this technical solution of the present disclosure, the core of the improvement is that a new coating is designed, and the heat reflection coefficient of the coating is different, which is more conducive to heat absorption, so that the rapid temperature rising of the steel plate temperature can be realized, thereby preventing the aluminum-silicon plating on the surface of the steel substrate from melting, and effectively reducing sticking to rollers.

In addition, after heat treatment, the aluminum-silicon plated steel plate designed by the present disclosure has no additional components or residual components except Al, Si, Fe, O. The appearance color of the thermal formed parts prepared by the aluminum-silicon plated steel plate after heat treatment is more uniform and consistent, and there is no obvious color difference.

In addition, the coating thickness of the aluminum-silicon plated steel plate designed by the present disclosure is thin, and the gas that is delivered and generated by decomposition in the heat treatment furnace is less, having less influence on the dew point in the furnace.

The aluminum-silicon plated steel plate involved in the present disclosure can reduce the melting of the aluminum-silicon plating in the process of superheating, thereby reducing the reaction between molten aluminum and water vapor in the furnace, reducing the generation of hydrogen atoms. It can reduce the hydrogen content of parts, and reduce the risk of hydrogen-induced delayed cracking.

### Description of the drawings

Fig. 1 schematically shows the diagram of the ramping curve of the aluminum-silicon plated steel plate of the present disclosure and the traditional aluminum-silicon plated steel plate heated to 900 °C in the heat treatment furnace.
Fig. 2 is a photograph of the surface morphology of the aluminum-silicon plated steel plate of Example 1 after heat treatment.

### Detailed Description

The aluminum-silicon plated steel plate described in the present disclosure and the hot stamped part will be further explained and illustrated below with reference to the drawings and specific examples. However, such explanation and illustration do not constitute any improper limitation on the technical solution of the present disclosure.

### Examples 1-6 and Comparative Example 1

Table 1 lists the mass percentages of the various chemical elements in the steel substrate of the corresponding aluminum-silicon plated steel plate used for the thermal formed parts of Examples 1-6 and Comparative Example 1.

**Table 1. (wt%, the balance is Fe and other unavoidable impurities except P, S)**

| No. | Chemical elements | | | | | | | | | | | | |
|---|---|---|---|---|---|---|---|---|---|---|---|---|---|
| | C | Si | Mn | Al | Ti | B | Cr | Nb | Mo | Ni | V | P | S |
| Ex. 1 | 0.05 | 0.1 | 0.3 | 0.005 | 0 | 0 | 0 | 0 | 0 | 0 | 0 | 0.001 | 0.001 |
| Ex. 2 | 0.1 | 0.01 | 0.5 | 0.01 | 0.02 | 0.001 | 0.1 | 0.001 | 0.001 | 0.001 | 0 | 0.003 | 0.001 |
| Ex. 3 | 0.2 | 0.2 | 1.4 | 0.02 | 0.01 | 0.02 | 0.15 | 0.005 | 0.005 | 0.002 | 0 | 0.01 | 0.002 |
| Ex. 4 | 0.23 | 0.8 | 2 | 0.05 | 0.03 | 0.003 | 0.2 | 0.04 | 0.04 | 0.05 | 0.001 | 0.02 | 0.004 |
| Ex. 5 | 0.3 | 2.0 | 3 | 0.1 | 0.1 | 0.1 | 0.3 | 0.05 | 0.5 | 0.2 | 0.05 | 0.1 | 0.06 |
| Ex. 6 | 0.35 | 1.0 | 2.2 | 0.3 | 0.02 | 0.05 | 0.5 | 0.1 | 0.2 | 0.5 | 0.1 | 0.3 | 0.1 |
| CEx.1 | 0.22 | 0.2 | 1.5 | 0.06 | 0.01 | 0.002 | 0.2 | 0.001 | 0.001 | 0.001 | 0 | 0.01 | 0.002 |

In the present disclosure, the specific process steps of the corresponding aluminum-silicon plated steel plate prepared in Examples 1-6 and Comparative Example 1 were as follows:
Example 1: According to the mass percentage of each chemical element shown in Table 1 above, the aluminum-silicon plated steel plate was obtained by steelmaking, hot rolling, cold rolling, hot plating, temper rolling, roll coating, and oiling, wherein the temper rolling rate was 0.8%, the thickness of the aluminum-silicon plating was 20 microns, the coating thickness was 2 microns, and the oiling amount was 300mg/m².

Example 2: According to the mass percentage of each chemical element shown in Table 1 above, the aluminum-silicon plated steel plate was obtained by steelmaking, hot rolling, cold rolling, hot plating, temper rolling, and roll coating, wherein the temper rolling rate was 1.4 %, the thickness of the aluminum-silicon plating was 10 microns, and the coating thickness was 0.5 microns.

Example 3: According to the mass percentage of each chemical element shown in Table 1 above, the aluminum-silicon plated steel plate was obtained by steelmaking, hot rolling, cold rolling, hot plating, temper rolling, roll coating, and oiling, wherein the temper rolling rate was 1.8%, the thickness of the aluminum-silicon plating was 27 microns, the coating thickness was 1.9 microns, and the oiling amount was 600mg/m².

Example 4: According to the mass percentage of each chemical element shown in Table 1 above, the aluminum-silicon plated steel plate was obtained by steelmaking, hot rolling, cold rolling, hot plating, temper rolling, roll coating, and oiling, wherein the temper rolling rate was 3%, the thickness of the aluminum-silicon plating was 30 microns, the coating thickness was 1.9 microns, and the oiling amount was 800mg/m².

Example 5: According to the mass percentage of each chemical element shown in Table 1 above, the aluminum-silicon plated steel plate was obtained by steelmaking, hot rolling, cold rolling, hot plating, temper rolling, roll coating, and oiling, wherein the temper rolling rate was 1.2%, the thickness of the aluminum-silicon plating was 24 microns, the coating thickness was 1.8 microns, and the oiling amount was 800mg/m².

Example 6: According to the mass percentage of each chemical element shown in Table 1 above, the aluminum-silicon plated steel plate was obtained by steelmaking, hot rolling, cold rolling, hot plating, temper rolling, roll coating, and oiling, wherein the temper rolling rate was 1%, the thickness of the aluminum-silicon plating was 23 microns, the coating thickness was 1 micron, and the oiling amount was 1000mg/m².

Comparative Example 1: According to the mass percentage of each chemical element shown in Table 1 above, the aluminum-silicon plated steel plate was obtained by steelmaking, hot rolling, cold rolling, hot plating, temper rolling, and oiling, wherein the temper rolling rate was 0.8%, the thickness of the aluminum-silicon plating was 20 microns, no coating was present, and the oiling amount was 300mg/m².

The steelmaking, hot rolling, cold rolling, annealing and hot plating methods of Examples 1-6 and Comparative Example 1 were as follows:
1) Steelmaking: smelting and casting were carried out according to the chemical composition in Table 1 to obtain a cast blank;
2) Hot rolling: including rough rolling, finish rolling and coiling, wherein the finish rolling temperature was 880~930°C, and the coiling temperature was 500~650°C;
3) Cold rolling: the cold rolling deformation rate was 30~70%;
4) Annealing: continuous annealing furnace treatment was performed, wherein the annealing temperature was 670~850°C;
5) Hot plating: after annealing, the steel plate entered the zinc pot for hot dipping, wherein the temperature of the plating solution was 640~680°C, and the cooling rate after plating was 5~30°C/s.

The specific process parameters are shown in Table 2 below.

**Table 2**

| | Finish rolling temperature (°C) | Coiling temperature (°C) | Cold rolling deformation rate | Annealing temperature (°C) | Plating solution temperature (°C) | Cooling rate after plating (°C/s) |
|---|---|---|---|---|---|---|
| Ex. 1 | 880 | 550 | 55 | 730 | 660 | 15 |
| Ex. 2 | 890 | 500 | 45 | 700 | 640 | 5 |
| Ex. 3 | 930 | 600 | 30 | 670 | 650 | 30 |
| Ex. 4 | 900 | 650 | 70 | 800 | 670 | 25 |
| Ex. 5 | 920 | 630 | 65 | 850 | 680 | 20 |
| Ex. 6 | 910 | 580 | 60 | 780 | 660 | 18 |
| CEx.1 | 880 | 550 | 55 | 730 | 660 | 15 |

In order to elaborate on the parameters of the aluminum-silicon plated steel plate of Examples 1-6 prepared in the present disclosure, the inventor further lists the basic parameters of the aluminum-silicon plated steel plates of Examples 1-6 and Comparative Example 1 in Table 3 below.

Table 3 lists the basic parameters of the aluminum-silicon plated steel plates of Examples 1-6 and Comparative Example 1 prepared in the present disclosure.

**Table 3**

| No. | Steel plate thickness (mm) | Aluminum-silicon plating thickness (micron) | Coating thickness (micron) | Temper rolling rate (%) | Oiling amount (mg/m²) | Si content in the coating (mg/m²) | Surface roughness of the steel substrate Ra | Rpc |
|---|---|---|---|---|---|---|---|---|
| Ex. 1 | 2 | 20 | 2 | 0.8 | 300 | 10 | 0.5 | 50 |
| Ex. 2 | 1.5 | 10 | 0.5 | 1.4 | 0 | 200 | 0.7 | 70 |
| Ex. 3 | 1.0 | 27 | 1.9 | 1.8 | 600 | 300 | 0.8 | 80 |
| Ex. 4 | 1.8 | 30 | 1.9 | 3 | 800 | 400 | 1.0 | 100 |
| Ex. 5 | 2.5 | 24 | 1.8 | 1.2 | 800 | 500 | 1.3 | 80 |
| Ex. 6 | 1.2 | 23 | 1 | 1 | 1000 | 1000 | 1.5 | 90 |
| CEx.1 | 2 | 20 | / | 0.8 | 300 | / | 0.5 | 50 |

| | | | | | | | | |
|---|---|---|---|---|---|---|---|---|
| Note: Si content was determined by X-ray fluorescence spectroscopy. | | | | | | | | |

When the aluminum-silicon plated steel plates of Examples 1-6 were actually prepared, a plating solution was needed to be used in the hot plating process to form an "aluminum-silicon plating" on the surface of the steel substrate. Similarly, after the formation of the aluminum-silicon plating, a coating material was further needed to be applied, so as to form a coating on the surface of the aluminum-silicon plating. Therefore, it is not difficult to see that the design of the chemical composition of the plating solution and the chemical composition of the coating material are also very important in the actual preparation of the aluminum-silicon plated steel plate of each example, and the design results of the chemical compositions of the relevant plating solutions and the coating materials are listed in Table 4-1 and Table 4-2 below, respectively.

Table 4-1 lists the chemical composition designs of the plating solutions and the plating layers of Examples 1-6.

**Table 4-1**

| No. | The plating solution |
|---|---|
| Ex. 1 | 8%Si, 2%Fe, with a balance of Al |
| Ex. 2 | 9%Si, 2.4%Fe, with a balance of Al |
| Ex. 3 | 10%Si, 2%Fe, with a balance of Al |
| Ex. 4 | 8%Si, 1%Mg, 2%Zn, 1%Fe, with a balance of Al |
| Ex. 5 | 6%Si, 0.5%Mg, 5%Zn, 0.1%Fe, with a balance of Al |
| Ex. 6 | 9%Si, 2.4%Fe, with a balance of Al |

Table 4-2 lists the chemical composition designs of the coating materials used in Examples 1-6.

**Table 4-2**

| No. | Coating ingredient | The specific component of the carbon material used in the filler | Resin component | Solvent component | Silane coupling agent | Mass ratio of the carbon material to the silane coupling agent |
|---|---|---|---|---|---|---|
| Ex. 1 | filler: 0.5%; resin: 10%; solvent: 89.5% | graphite | polyurethane | water | epoxy silane | 0.05 |
| Ex. 2 | filler: 10%; resin: 30%; solvent: 60% | activated carbon | polyacrylate | ethanol | aminosilane | 0.2 |
| Ex. 3 | filler: 20%; resin: 40%; solvent: 40% | graphene | polyethylene terephthalate | ethyl ether | vinyl silane | 0.3 |
| Ex. 4 | filler: 30%; resin: 30%; solvent: 40% | graphene | polyurethane | butanone | vinyltriethoxysilane | 0.4 |
| Ex. 5 | filler: 10%; resin: 50%; solvent: 40% | graphite | polyacrylate | ethyl acetate | vinyltris(β-methoxyethoxy)silane | 0.5 |
| Ex. 6 | filler: 20%; resin: 30%; solvent: 50% | graphite | polyacrylate | ethyl ether | methacryloy-loxysilane | 1 |

The coating was formed by coating the coating materials in Table 4-2 to the surface of the aluminum-silicon plating. The N element in the coating layer came from the resin in the coating material, and the C, H, O, N elements in the coating layer came from the resin, solvent and silane coupling agent in the coating material. The coating layer in the present disclosure did not contain P. In this technical solution, the content of Si in the coating layer was controlled at 10-1000mg/m² by adjusting the ratio and content of the silane coupling agent.

It should be noted that although the carbon materials in the above Examples 1-6 are all single carbon materials, it is also feasible to combine graphite, graphene and activated carbon in other embodiments.

In the present disclosure, the thermal formed parts of Examples 1-6 were prepared by the following steps:
(1) According to the mass percentage of each chemical element shown in Table 1, the corresponding aluminum-silicon plated steel plate with a coating on the surface of aluminum-silicon plating was manufactured by steelmaking, hot rolling, cold rolling, hot plating, leveling, and applying a coating material to form the corresponding coating.
(2) According to the shape of the required part, the corresponding aluminum-silicon plated steel plate was cut into a blank.
(3) The obtained blank was delivered into a heat treatment furnace for heat treatment: the processed blank was put into the heat treatment furnace and the ramping rate of the blank from room temperature to 700 °C was controlled to be 8-30 °C/s, and the ramping rate above 700 °C was controlled to be 1-10 °C/s; wherein the set temperature of the heat treatment furnace was 700-1000 °C. The temperature could be raised in stages, could rise and fall, or it could be one or more temperatures. The maximum temperature of the heat treatment furnace was 900-1000 °C and the total residence time of the blank after it entered the heat treatment furnace was controlled at 1-15min.
(4) The blank was transferred to a mold for hot stamping or roll forming: the temperature at which the blank was transferred to the mold was not less than 650 °C, the blank was cooled at the same time as it was formed, the cooling rate of the blank in the mold from 800 °C to 300 °C was not less than 25 °C/s, and the stamping speed at which the mold began to contact the blank until the blank was formed was controlled to be 40-100mm/s.

It should be noted that, in the present disclosure, the designed aluminum-silicon plated steel plate, the hot-stamping part and the related manufacturing process thereof of Examples 1-6 all meet the requirements designed by the present disclosure.

Table 5 lists the relevant process parameters of the manufacturing methods of the thermal formed parts of Examples 1-6.

**Table 5**

| No. | Maximum temperature in the furnace (°C) | Set temperature for heat treatment (°C) | Total residence time in the furnace (min) | Residence time at 900-1000°C (min) | Ramping method | Ramping rate from room temperature to 700°C (°C/s) | Ramping rate from 700 to 900°C (°C/s) | Temperature at which the blank was transferred to the mold (°C) | cooling rate of the blank in the mold from 800°C to 300°C (°C/s) | Stamping speed at which the mold began to contact the blank until the blank was formed (mm/s) |
|---|---|---|---|---|---|---|---|---|---|---|
| Ex. 1 | 900 | 700-900 | 3.5 | 3 | In stage | 8 | 2 | 650 | 25 | 40 |
| Ex. 2 | 930 | 930 | 3 | 3 | Normal | 13 | 5 | 680 | 60 | 50 |
| Ex. 3 | 945 | 780-920 | 2.5 | 2 | In stage | 30 | 9 | 700 | 70 | 60 |
| Ex. 4 | 950 | 850-950 | 3 | 2 | In stage | 15 | 3 | 730 | 80 | 80 |
| Ex. 5 | 940 | 800-940 | 4 | 3.5 | In stage | 13 | 1 | 750 | 30 | 100 |
| Ex. 6 | 1000 | 800-1000 | 3 | 2.5 | In stage | 16 | 4 | 780 | 40 | 50 |
| CEx.1 | 930 | 800-930 | 5.5 | 5 | In stage | 5 | 0.8 | 700 | 60 | 60 |

It should be noted that, in the above Table 4 of the present disclosure, the heat treatment temperature of the heat treatment process in step (2) in Examples 1-6 is a range value rather than a single point value, because the heat treatment furnace is usually divided into sections, the temperature of each section can be controlled separately, and the temperature of each section can be different. The temperature range of the present disclosure is the distribution range of all temperatures in each section.

In the above technical solution of the present disclosure, during the preparation, the inventor specially observed and studied whether the phenomenon of "the plating sticking to rollers" occurred when the thermal formed parts were prepared from the aluminum-silicon plated steel plate of each Example and the Comparative Example. If the phenomenon of "the plating sticking to rollers" appeared, it was marked as "yes"; If there was no phenomenon of "the plating sticking to rollers", it was marked as "no". Relevant observations were listed in Table 6 below.

**Table 6**

| No. | The plating sticking to rollers |
|---|---|
| Ex. 1 | no |
| Ex. 2 | no |
| Ex. 3 | no |
| Ex. 4 | no |
| Ex. 5 | no |
| Ex. 6 | no |
| CEx.1 | Yes |

As can be seen from the Table 6, the phenomenon of "a plating sticking to roller" did not appear when the aluminum-silicon plated steel plate with a coating obtained in Examples 1-6 based on this design of the present disclosure was prepared into a thermal formed part. However, when the aluminum-silicon plated steel plate obtained in Comparative Example 1 was prepared into a thermal formed part, the phenomenon of "a plating sticking to roller" occurred.

Correspondingly, with respect to the finished thermal formed part product finally prepared from the aluminum-silicon plated steel plate of each Example and Comparative Example, the finished thermal formed parts prepared in Examples 1-6 and Comparative Example 1 were sampled respectively, and the microstructure of the part of each Example and Comparative Example was tested with a metallographic microscope after metallographic sample preparation, grinding, polishing and corrosion, and the relevant test results were listed in Table 7 below.

**Table 7**

| No. | microstructure |
|---|---|
| Ex. 1 | ferrite |
| Ex. 2 | ferrite + bainite |
| Ex. 3 | martensite |
| Ex. 4 | martensite |
| Ex. 5 | martensite |
| Ex. 6 | martensite |
| CEx.1 | martensitic aluminum-silicon plated steel plate |

According to Table 7, it can be seen that, in the present disclosure, the final thermal formed parts prepared in Examples 1-6 had a microstructure of at least one of martensite, bainite and ferrite.

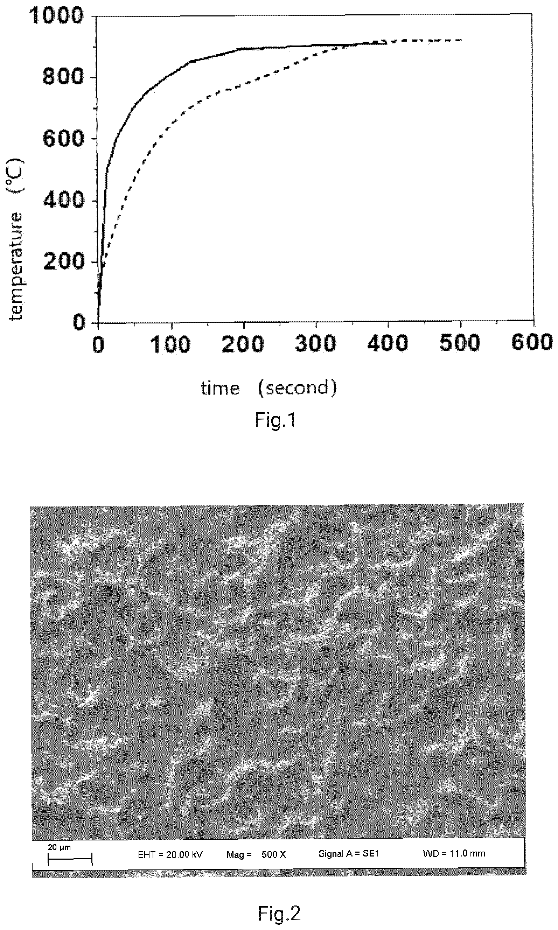

Fig. 1 schematically shows the diagram of the ramping curve of the aluminum-silicon plated steel plate of the present disclosure and the traditional aluminum-silicon plated steel plate heated to 900 °C in the heat treatment furnace.

As shown in Fig.1, the "solid line" shown in Fig.1 represents the aluminum-silicon plated steel plate according to the present disclosure, and the "dotted line" shown in Fig.1 represents the traditional aluminum-silicon plated steel plate.

In the test of Fig.1, the thickness of the aluminum-silicon plated steel plate according to the present disclosure and that of the traditional aluminum-silicon plated steel plate were specifically adopted as 2.0mm. After comparison, it is not difficult to see that the ramping rate of the aluminum-silicon plated steel plate according to the present disclosure was significantly higher than that of the traditional aluminum-silicon plated steel plate, especially the ramping rate from room temperature to 700 °C.

Fig. 2 is a surface morphology photograph of the aluminum-silicon plated steel plate of Example 1 after heat treatment.

As shown in Fig. 2, in the embodiment of Example 1 designed by the present disclosure, the aluminum-silicon plated steel plate of the present disclosure had a surface with uneven profile after it was subjected to the heat treatment process of step (2) of the manufacturing method according to the present disclosure.

It should be noted that combinations of the various technical features in this case are not limited to the combinations described in the claims of this case or the combinations described in the specific Examples. All technical features recorded in this case can be combined freely or associated in any way unless a contradiction occurs.

It should also be noted that the Examples listed above are only specific embodiments of the present disclosure. Obviously, the present disclosure is not limited to the above Examples, and changes or modifications made thereto can be directly derived from the present disclosure or easily conceived of by those skilled in the art, all of which fall within the protection scope of the present disclosure.

## Claims

1. An aluminum-silicon plated steel plate with a coating, which comprises a steel substrate and an aluminum-silicon plating plated on the surface of the steel substrate, wherein the surface of the aluminum-silicon plating is further coated with a coating, wherein the coating contains C, H, O, N and Si and does not contain P, and the content of Si in the coating is 10-1000 mg/m².

2. The aluminum-silicon plated steel plate with a coating according to claim 1, wherein the thickness of the coating is no more than 2 microns and does not exceed one-tenth of the thickness of the aluminum-silicon plating.

3. The aluminum-silicon plated steel plate with a coating according to claim 1, wherein the thickness of the aluminum-silicon plating is 10-30 microns.

4. The aluminum-silicon plated steel plate with a coating according to claim 1, wherein the steel substrate has a surface roughness Ra of 0.5-1.5, and Rpc of 50-100.

5. The aluminum-silicon plated steel plate with a coating according to claim 1, wherein the steel substrate comprises the following chemical elements in mass percentage:
C: 0.05~0.5%, Si: 0.01~2.0%, Mn: 0.3~3.0%, Al: 0.005~0.3%, Ti≤0.1%, B≤0.1 %, Cr≤0.5%, Nb≤0.1%, V≤0.1%, Ni≤0.5%, Mo≤0.5%, with a balance of Fe and other unavoidable impurities; preferably, among the unavoidable impurities, P is ≤0.3%, S is ≤0.1%.

6. The aluminum-silicon plated steel plate with a coating according to claim 1, wherein the aluminum-silicon plating comprises Al and unavoidable impurities, and further comprises: Si: 6-11wt%, 0<Fe≤4wt%; optionally, the aluminum-silicon plating further comprises Mg and/or Zn.

7. The aluminum-silicon plated steel plate with a coating according to claim 1, wherein the coating comprises a filler and a resin; preferably, the filler comprises a carbon material and a silane coupling agent; preferably, the resin comprises at least one of polyester resins, polyurethane resins and polyacrylic resins; preferably, the carbon material comprises at least one of graphite, graphene and activated carbon; preferably, the mass ratio of the filler to the resin is 1:1~1:20; preferably, the mass ratio of the carbon material to the silane coupling agent is 0.05~1.

8. The aluminum-silicon plated steel plate with a coating according to claim 1, wherein the surface of the coating is further coated with an oiling layer.

9. A manufacturing method of the aluminum-silicon plated steel plate with a coating according to any one of claims 1-7, which comprises steps of steelmaking, hot rolling, cold rolling, hot plating, temper rolling, applying a coating material to form the coating.

10. The manufacturing method of the aluminum-silicon plated steel plate with a coating according to claim 9, wherein the mass percentages of the effective ingredients of the coating materials are as follows:
a filler: 0.5~30%;
a resin: 10~50%;
with a balance of a solvent;
wherein the filler comprises a carbon material and a silane coupling agent.

11. The manufacturing method of the aluminum-silicon plated steel plate with a coating according to claim 10, wherein the mass ratio of the carbon material to the silane coupling agent is 0.05~1.

12. The manufacturing method of the aluminum-silicon plated steel plate with a coating according to claim 10, wherein the carbon material comprises at least one of graphite, graphene and activated carbon.

13. The manufacturing method of the aluminum-silicon plated steel plate with a coating according to claim 10, wherein the resin comprises at least one of polyester resins, polyurethane resins and polyacrylic resins.

14. The manufacturing method of the aluminum-silicon plated steel plate with a coating according to claim 10, wherein the solvent is water, ethanol, ketones, ethers or esters.

15. The manufacturing method of the aluminum-silicon plated steel plate with a coating according to claim 9, wherein, in the temper rolling step, the temper rolling rate is controlled at 0.8-3%.

16. The manufacturing method of the aluminum-silicon plated steel plate with a coating according to claim 9, wherein it further comprises oiling after the step of applying a coating material, wherein the oiling amount is controlled to be 300-1000mg/m².

17. A thermal formed part made of the aluminum-silicon plated steel plate according to any one of claims 1-8.

18. A thermal formed part made of the aluminum-silicon plated steel plate prepared by the manufacturing method according to any one of claims 9-16.

19. The thermal formed part according to claim 17 or 18, wherein it has a microstructure of at least one of martensite, bainite and ferrite.

20. A manufacturing method of the thermal formed part according to any one of claims 17-19, which comprises steps of:
(1) cutting the aluminum-silicon plated steel plate into a blank;
(2) performing a heat treatment in a furnace: a heating rate of the blank from room temperature to 700 °C is controlled to be 5-30 °C/s, preferably 8-30 °C/s, and the heating rate above 700 °C is controlled to be 1-10 °C/s;
(3) transferring the blank to a mold for hot stamping or roll forming, wherein the blank is cooled with the help of the mold, and the cooling rate of the blank in the mold from 800 °C to 300 °C is not less than 25 °C/s.

21. The manufacturing method of the thermal formed part according to claim 21, wherein, in step (2), the total residence time of the blank after it enters the heat treatment furnace is controlled at 1-15min.

22. The manufacturing method of the thermal formed part according to claim 21, wherein, in step (3), the temperature at which the blank is transferred to the mold is not less than 650 °C, the blank is cooled at the same time as it is formed, and the stamping speed at which the mold begins to contact the blank until the blank is formed is controlled to be 40-100mm/s.
